# FASCICULE DE BREVET EUROPEEN

(11) **EP 2 391 588 B1**
(45) Date de publication et mention de la délivrance du brevet: **26.07.2017**
(21) Numéro de dépôt: 10702101.6
(22) Date de dépôt: 28.01.2010
(51) Int. Cl.: C03C 17/00, C01B 33/32, B32B 17/10, C09K 21/02, C03C 17/22, B32B 17/06

(54) **COUCHES DE SILICATES ALCALINS POUR VITRAGES ANTI-FEU**
ALKALISILIKATSCHICHTEN FÜR BRANDSCHUTZVERGLASUNGEN
LAYERS OF ALKALI SILICATES FOR FIREPROOF GLAZING

(30) Priorité: 29.01.2009 EP 09151625
(43) Date de publication de la demande: 07.12.2011
(73) Titulaire: AGC Glass Europe, 1348 Louvain-la-Neuve (BE)
(72) Inventeur: LESCOT, Thomas, B-6040 Jumet (BE); RASE, François, B-6040 Jumet (BE)
(74) Mandataire: Le Vaguerèse, Sylvain Jacques
(86) Numéro de dépôt international: PCT/EP2010/050979
(87) Numéro de publication internationale: WO 2010/086356

(56) Documents cités:
- EP-A1- 2 111 977
- US-A- 4 626 301
- US-A- 5 565 273
- US-B1- 6 838 180

## Description

La présente invention concerne la production de couches de silicates alcalins, telles que celles incluses dans des vitrages anti-feu et les vitrages qui comprennent de telles couches.

Les couches de silicates alcalins utilisées dans les vitrages anti-feu présentent des compositions variées en fonction des propriétés recherchées mais aussi en fonction de leurs modes de préparation. Concernant les modes de préparation de ces couches deux grandes familles se distinguent selon qu'elles nécessitent ou non une opération de séchage plus ou moins prolongée à partir d'une composition fluide à forte teneur en eau.

Les couches obtenues après un séchage prolongé peuvent offrir une grande variété de compositions et sont habituellement préparées à partir de solutions de silicates industrielles relativement riches en eau. Les opérations de séchage sont conduites le plus souvent après application d'une couche de solution directement sur une feuille de verre entrant dans la composition du vitrage. Il a été également proposé d'effectuer le séchage de la couche sur un support temporaire dont elle est séparée pour être introduite ultérieurement dans les structures choisies.

Quel que soit le mode retenu, l'opération de séchage permet d'atteindre une variété importante de compositions distinctes offrant des propriétés adaptées à divers modes d'utilisation. En particulier il est possible en opérant un séchage relativement poussé, de produire des couches intumescentes à faible teneur en eau et rapport molaire SiO₂/M₂O élevé, présentant de ce fait un caractère réfractaire important et une bonne stabilité au feu. En contrepartie, l'opération de séchage est longue et délicate. A l'inverse, des produits à teneur en eau plus élevée peuvent aussi être préparés en limitant l'opération de séchage.

La seconde famille de produits correspond aux couches de silicates alcalins dont la mise en forme est obtenue à partir d'une composition fluide laquelle durcit pratiquement sans séchage. Ces compositions peuvent être conservées plus ou moins longtemps avant leur prise en masse. Cet intervalle de temps entre leur préparation et la formation de la couche durcie, est utilisé pour introduire la composition dans le vitrage. Il s'agit notamment de couler la composition dans le volume ménagé entre deux feuilles de verre. Mais la composition peut aussi être appliquée sur une feuille de verre puis recouverte par une deuxième feuille, après durcissement ou à différents stades de celui-ci, l'ensemble étant soumis ultérieurement à étuvage ou calandrage pour fixer les éléments les uns aux autres.

Dans cette seconde famille de produits, la teneur en eau de la couche de silicate finale est habituellement plus élevée que pour les produits "séchés". Les propriétés de résistance au feu sont en partie dépendantes de cette teneur en eau. Pour atteindre les performances requises il est alors nécessaire de faire une sélection très précise des caractéristiques non seulement de composition, mais aussi de celles des feuilles de verre utilisées. En dépit de certaines limitations dans les propriétés, l'avantage de l'absence de séchage est un atout suffisant pour rendre ces produits particulièrement intéressants, sous réserve encore une fois de procéder à un choix très précis de leurs caractéristiques.

Les publications US 5 565 273 et EP 2 111 977A1illustrent le type de couches intumescentes obtenues sans séchage, la seconde concernant des produits de résistance au feu de durée relativement importante.

Pour conserver les propriétés de résistance au feu il est particulièrement important de faire en sorte que le rapport molaire silice/oxyde alcalin reste relativement élevé. Il est compris entre 3,5 et 7. Le plus souvent ce rapport se situe entre 4 et 6.

Pour ces valeurs de rapport molaire les compositions qui ne sont pas séchées sont d'autant plus instables, autrement dit, elles ont tendance à prendre en masse spontanément d'autant plus rapidement que la teneur en eau est moins élevée. En pratique les teneurs en eau les moins importantes ne sont pas inférieures à 30% en poids et habituellement égales ou supérieures à 35% en poids. Pour les rapports molaires préférés indiqués ci-dessus, elles sont ordinairement au plus égales à 44% en poids, et le plus souvent inférieures ou égales à 43% en poids.

La préparation de ces compositions fait l'objet de diverses demandes antérieures publiées, notamment de la demande de brevet WO 2008/145611. Le plus couramment elles sont obtenues par réaction de suspensions de silice colloïdale avec un hydroxyde alcalin. Ce mode peut être aussi combiné avec l'utilisation de solution industrielle de silicates alcalins. Le plus souvent pour parvenir aux compositions qui présentent les teneurs en eau les moins fortes, la préparation comporte aussi avantageusement une déshydratation de la composition. Cette dernière peut être conduite de la manière décrite dans la demande antérieure de brevet européen non publiée déposée le 17 novembre 2008 sous le numéro 08 169 285.7.

Dans l'utilisation des compositions de silicates alcalins qui ne nécessitent pas de séchage, et qui durcissent spontanément à partir d'une composition fluide, il faut néanmoins disposer d'un temps d'utilisation ("pot-life") suffisant. Ce temps qui peut aller de quelques heures à un ou même deux jours, est d'autant plus long que la composition est maintenue à faible température. Pour allonger ce temps d'utilisation la composition est avantageusement maintenue à moins de 10°C, par exemple à 4°C.

Si il est souhaitable de disposer d'un temps d'utilisation relativement long, lors de l'utilisation de la composition, après son introduction dans l'espace ménagé entre deux feuilles de verre, ou son application sur une feuille du vitrage, il est avantageux de parvenir à la prise en masse dans les délais les plus courts possibles pour améliorer la cadence de production et donc son coût. A l'inverse de la période de conservation, il est alors avantageux d'élever la température de la composition, tout en restant en dessous des températures pour lesquelles l'eau aurait tendance à s'évaporer. Pour cette raison la température de traitement, lorsqu'elle est accrue, n'est pas supérieure à 100°C, et de préférence reste inférieure à 90°C.

La mise en oeuvre d'une température de cet ordre peut être obtenue par tous les moyens. En particulier il est possible de passer les vitrages constitués ou les feuilles de verre revêtues de la composition dans des fours ou des étuves. Pour que l'opération soit conduite de manière homogène, le chauffage étant principalement de type convection et conduction, l'accroissement de température est nécessairement relativement lent. A défaut, un chauffage rapide est susceptible de conduire à l'apparition d'éléments indésirables, notamment la formation de bulles de dégazage, ou encore de distorsions optiques liées à un durcissement qui se développe dans le temps de façon inhomogène avec l'élévation de la température.

Pour conserver le bénéfice de la rapidité de formation du gel sans risquer de développer des inconvénients du type de ceux indiqués ci-dessus, les inventeurs ont recherché le moyen de faciliter l'accroissement de température de manière mieux contrôlée. La conduction ou la convection conduisant à un transfert relativement lent, les inventeurs ont recherché l'utilisation d'autres moyens. Les inventeurs proposent de mettre en oeuvre une technique de chauffage par irradiation.

Pour atteindre ce résultat les inventeurs proposent en conséquence selon l'invention, de procéder de la manière qui fait l'objet de la revendication 1.

Pour permettre un bon transfert d'énergie il convient de choisir des rayonnements qui interagissent avec les compositions traitées. Dans la mesure où ces compositions ont toutes une teneur en eau non négligeable, elles sont sensibles aux rayons dont l'énergie est absorbée par l'eau, et en particulier aux rayons présentant une longueur d'onde suffisante comme les rayons infrarouges.

Selon l'invention on utilise des émetteurs infrarouges dont les spectres présentent un maximum pour les longueurs d'onde se situant entre 0,5 et 5µm et de manière particulièrement préférée entre 0,7 et 3µm.

En pratique les rayons infrarouges sont rapidement absorbés par les compositions de silicates alcalins. Leur efficacité est donc bien adaptée lorsque les couches traitées sont relativement peu épaisses, notamment lorsque ces couches ne sont pas de plus de 8mm d'épaisseur et de préférence pas de plus de 6mm d'épaisseur.

L'absorption progressive des infrarouges peut réduire leur pénétration et leur efficacité dans les parties les plus profondes lorsque les couches sont très épaisses. Dans l'hypothèse où des couches de silicates alcalins plus épaisses doivent subir ce traitement, il est préférable de procéder au traitement sur les deux faces de la couche de composition.

Le traitement de deux faces de la couche peut être effectué sans difficulté particulière. Ce traitement peut être réalisé au travers des feuilles de verre qui, au moins pour des verres sodo-calciques clairs traditionnels, sont largement transparentes à ces rayonnements. A titre indicatif pour un verre clair usuel de 4mm d'épaisseur la transmission des infrarouges est de l'ordre de 86%. L'atténuation des rayons passant au travers d'une feuille de verre est donc relativement limitée. Le chauffage au travers de la feuille peut donc être convenablement entrepris.

Pour les raisons exposées, que le durcissement de la couche de silicates alcalins soit réalisé alors que la composition est enfermée entre deux feuilles de verre ou simplement appliquée sur une feuille avant le recouvrement par une seconde feuille, l'exposition aux infrarouges peut être conduite sur les deux faces de la couche.

Le traitement aux infrarouges est maintenu le temps nécessaire pour que la couche se rigidifie. Ce temps est d'autant plus bref que la teneur en eau de la composition est plus réduite, mais aussi que la température de la couche soumise à cette irradiation est plus élevée.

Il convient cependant de souligner que le comportement rhéologique de la composition dépend en partie de sa température. La composition, en particulier si sa teneur en eau est relativement élevée, c'est-à-dire voisine des maxima indiqués ci-dessus, peut conserver une consistance pâteuse à température élevée, alors que la même composition ramenée à température ambiante serait durcie.

Lorsque la température dans la couche est supérieure à 60°C et de préférence supérieure à 80°C, le durcissement de la couche ne dure que quelques minutes. Selon la nature précise de la composition et la température à laquelle elle est portée, le traitement est inférieur à 10 minutes et peut même être inférieur à 8 minutes.

La durée du traitement est encore fonction de la phase de montée en température. Celle-ci est avantageusement aussi brève que possible sans risquer pour autant l'apparition de zones surchauffées qui pourraient conduire accidentellement à l'évaporation de l'eau de la couche. En pratique la montée en température est avantageusement atteinte en moins de deux minutes. Une fois la température la plus haute atteinte, elle est maintenue en modulant la puissance d'irradiation.

Les traitements selon l'invention peuvent être mis en oeuvre de façon discontinue. Les pièces constituées, qu'il s'agisse de revêtir une feuille de verre d'une couche de composition, ou qu'il s'agisse de former une lame de composition emprisonnée entre deux feuilles de verre, sont par exemple introduites dans une enceinte et soumises de façon statique à l'exposition des rayonnements. Cette façon de procéder, même si l'exposition est relativement brève, immobilise les matériels et nécessite la multiplication de ceux-ci. Pour cette raison il est préféré selon l'invention d'opérer cette exposition de manière dynamique. La couche à traiter est animée d'un mouvement relatif par rapport à la source de ce rayonnement constituée par exemple d'une ou plusieurs rampes infrarouges disposées transversalement à la direction de progression des couches à traiter.

Lorsque l'irradiation est conduite sur une composition appliquée sur une feuille de verre, la surface de la couche restant exposée à l'atmosphère environnante, on constate que l'élévation de température de la composition s'accompagne d'une diminution de la teneur en eau par évaporation. Cette réduction de la teneur en eau est liée à la température et au degré hygrométrique de l'atmosphère environnante. Cette diminution de la teneur en eau n'est pas préjudiciable à la préparation de la couche. Elle peut même conduire à limiter les opérations de déshydratation qui sont mises en oeuvre dans la préparation préalable de la composition, sans toutefois se substituer à celles-ci dans la mesure où la diminution de la teneur en eau reste de faible importance. Elle l'est d'autant plus que l'opération est relativement brève.

Dans ce qui précède l'invention présentée consiste en l'utilisation d'une irradiation infrarouge destinée au chauffage de la couche de silicate alcalin en vue de son durcissement. Cette technique peut aussi être associée au chauffage par d'autres moyens plus traditionnels tels que la convection ou conduction mise en oeuvre dans un four.

La production des vitrages selon l'invention est représentée de façon schématique aux figures annexées dans lesquelles:
- la figure 1 est une vue schématique en perspective d'un vitrage anti-feu élémentaire selon l'invention ;
- la figure 2 est un diagramme d'un mode de production de la composition intumescente utilisée selon l'invention ;
- la figure 3 est un diagramme d'un autre mode de production de la composition intumescente utilisée selon l'invention ;
- la figure 4 est un diagramme illustrant un mode de production de vitrages selon l'invention ;
- la figure 5 est un diagramme d'un autre mode de production de vitrages selon l'invention ;
- la figure 6 est une vue schématique en perspective de moyens utilisés pour l'application de la technique selon l'invention ;
- la figure 7 illustre la puissance délivrée par deux émetteurs IR différents.

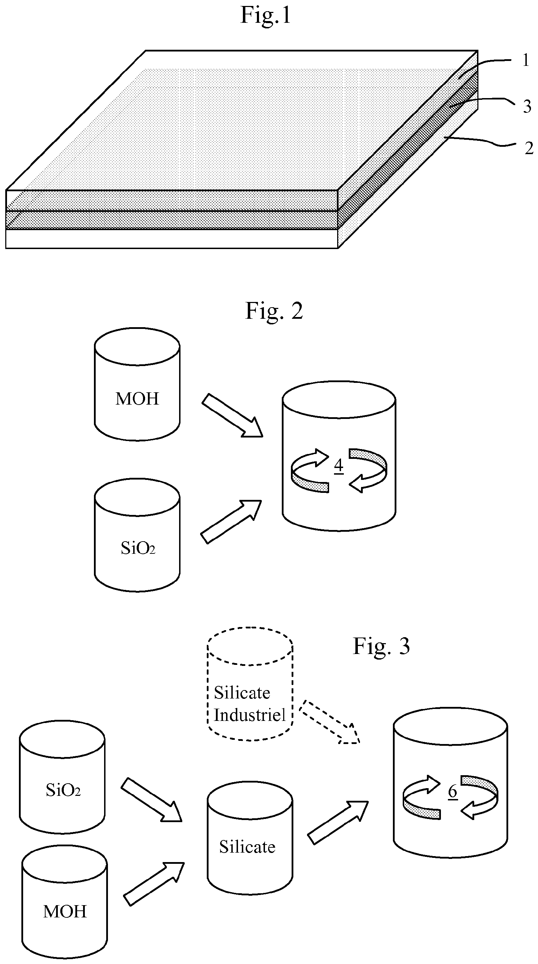

L'élément de base des vitrages anti-feu transparents représenté à la figure 1 est constitué systématiquement d'une couche intumescente 3, prise entre deux feuilles de verre 1 et 2. Les feuilles de verre comme représentées sont monolithiques. Le cas échéant elles sont constituées d'un ensemble feuilleté incluant une feuille intercalaire par exemple de type butyral de polyvinyle (PVB).

Sur la base de cet élément les vitrages anti-feu commercialisés sont développés notamment en associant dans un même ensemble plusieurs couches intumescentes et plusieurs feuilles de verre, identiques ou différentes selon l'usage envisagé. Dans la pratique, la multiplication des couches a pour but notamment d'accroître les caractéristiques de résistance au feu, les multiples couches intumescentes additionnant leurs effets. De tels assemblages sont avantageusement remplacés par d'autres dans lesquels les couches sont plus épaisses, le mode de formation sans séchage se prêtant bien pour les raisons indiquées plus haut à la formation de couches épaisses.

Par ailleurs les éléments décrits précédemment qui comportent au moins une couche intumescente entre deux feuilles de verre peuvent être inclus dans des structures comportant plusieurs de ces éléments et/ou des feuilles de verre ou assemblages de feuilles de verre, tels que des assemblages feuilletés et/ou des vitrages comportant plusieurs ensembles de feuilles.

La figure 2 présente de façon schématique un mode de préparation de la composition destinée à produire la couche intumescente. Selon le mode préféré la composition de silicate est formée à partir d'un mélange d'hydroxyde alcalin MOH et d'une suspension de particules de silice SiO₂. De préférence l'alcalin est le potassium ou le sodium ou des mélanges des deux. De préférence la silice colloïdale utilisée est constituée de particules dont les dimensions moyennes sont supérieures à 40nm. A ces constituants de base s'ajoutent le cas échéant les additifs notamment les glycols, les tensio-actifs etc.

Le mélange est effectué pour parvenir aux compositions adéquates selon l'invention à savoir présentant une teneur en eau (compte non tenu des additifs organiques éventuels) aussi faible que possible et voisine de 50% ou moins, avec un rapport molaire relativement élevé comme indiqué précédemment. Le mélange est effectué sous agitation pour bien homogénéiser la composition.

La composition 4 est dégazée pour éliminer les bulles éventuellement présentes après ce mélange. Elle est soumise à une déshydratation sous pression réduite en maintenant la température à moins de 100°C pour ajuster la teneur en eau pratiquement à la teneur qui sera celle de la couche intumescente finale, autrement dit à une teneur au plus égale à 44%.

La composition intumescente est stable à la température ordinaire. Elle l'est encore davantage en abaissant la température, par exemple lorsqu'elle est conservée à environ 4°C.

La figure 3 illustre la variante dans laquelle une part de la silice de la composition provient de solutions de silicates industriels. Il reste une part d'au moins 40% de la silice provenant de silice colloïdale répondant aux caractéristiques énoncées. La composition obtenue 6 peut présenter une teneur en eau plus faible que dans le cas précédent en partant d'un silicate préparé de manière à être très concentré. Comme précédemment la teneur en eau est avantageusement ajustée par une opération de déshydratation.

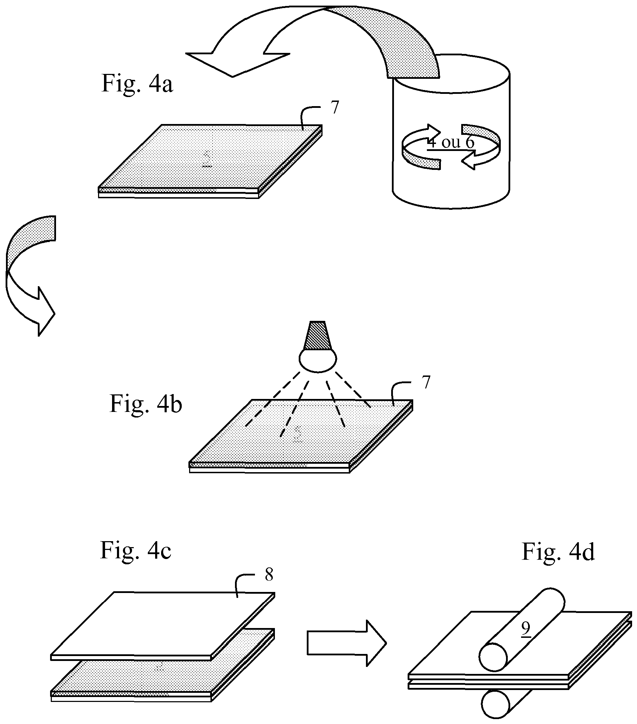

La figure 4 montre une manière d'utilisation des compositions intumescentes préparées.

A la figure 4a, la composition liquide est appliquée en une couche 7 sur une feuille de verre 5 horizontale. La composition est maintenue en place par un cordon étanche non représenté disposé à la périphérie.

Selon sa nature la composition est déjà suffisamment visqueuse de telle sorte qu'elle se répand avec une certaine lenteur. Cette particularité peut être mise à profit pour constituer le cordon étanche à la périphérie dans la composition elle-même. Le figeage accéléré de la composition sur le bord de la feuille est obtenu par exemple par un chauffage intense strictement localisé au pourtour de la feuille. Ce chauffage peut être appliqué sur la composition mais aussi sur la feuille de verre avant que celle-ci ne soit revêtue de la composition.

La couche de composition étalée convenablement est ensuite exposée au rayonnement infrarouge comme indiqué à la figure 4b. Une deuxième feuille de verre 8 vient recouvrir la couche 7 pendant ou après l'exposition et le durcissement.

Dans le mode représenté l'exposition est faite alors que la feuille 8 n'est pas appliquée. Compte tenu de ce que la feuille de verre clair, sauf si elle est très épaisse, absorbe peu les infrarouges, l'exposition nécessaire n'est pas sensiblement modifiée que l'on procède à l'exposition avant ou après mise en place de la feuille 8. Toutefois comme indiqué précédemment l'exposition de la couche au contact de l'atmosphère environnante conduit normalement à une diminution limitée de la teneur en eau due à l'évaporation naturelle au contact de l'atmosphère.

La figure 4b montre l'irradiation au dessus de la feuille de verre sur laquelle la composition est appliquée. L'exposition peut bien entendu être conduite à partir de l'autre face, c'est-à-dire à travers la feuille de verre pour les raisons indiquées ci-dessus.

Pour améliorer l'adhérence de la couche intumescente à la feuille de verre il est possible d'appliquer sur celle-ci, ou encore d'introduire dans la composition, des composés favorisant cette adhérence. Il s'agit par exemple de silanes comportant éventuellement des groupes fonctionnels tels les amino-silanes.

L'opération de superposition des feuilles de verre et des couches intumescentes comprend éventuellement plusieurs couches intumescentes et autant de feuilles de verre supplémentaires. Ces couches intumescentes et feuilles de verre sont identiques ou différentes selon les applications envisagées.

L'assemblage final, effectué après durcissement, est conduit avantageusement par calandrage entre des rouleaux comme indiqué en 9 (figure 4d). On peut également procéder à un passage à l'autoclave. La température de l'autoclave est assortie à la pression mise en oeuvre. A titre indicatif sous 13 atmosphères relatives, la température ne dépasse pas 130°C.

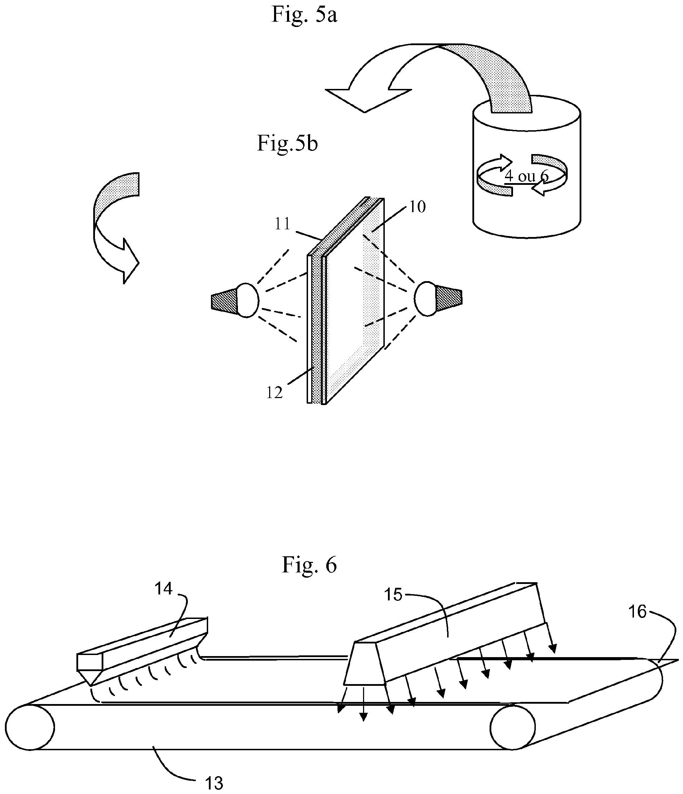

Dans la manière présentée à la figure 5, la composition intumescente est versée dans l'espace délimité par deux feuilles de verre 10 et 11 réunies sur leurs bords par un cordon de matériau 12 qui rend cet espace étanche. Comme précédemment la composition durcit sans séchage, entre les feuilles de verre. Ce durcissement est accéléré par l'exposition aux rayons infrarouges. A la figure 5b, l'exposition schématisée est conduite simultanément sur les deux faces de l'ensemble améliorant encore l'homogénéité de traitement. Mais même dans cette disposition il est possible de n'irradier que d'un seul côté.

Les figures 4 et 5 montrent des expositions réalisées de manière statique. Les sources infrarouges et les vitrages sont immobiles. En pratique, dans la production industrielle il est préférable de procéder en assurant un mouvement de balayage de la couche de composition par la ou les sources infrarouges. L'utilisation de rampes infrarouges s'étendant transversalement à la couche à traiter, et le mouvement relatif de la couche et des sources, assurent un traitement uniforme de cette couche. Le mouvement en question est soit celui des sources elles-mêmes la composition restant immobile, soit l'inverse. Dans le premier cas il s'agit par exemple de maintenir les feuilles revêtues de la composition pour éviter toute irrégularité de surface occasionnée par le mouvement. Dans le second cas les feuilles de verre revêtues de composition sont disposées sur des moyens transporteurs qui les font passer sous une, ou mieux plusieurs rampes infrarouges, la vitesse de défilement et le nombre de sources IR étant choisis de façon à maintenir l'exposition le temps nécessaire pour le durcissement de la couche.

La figure 6 illustre un mode analogue dans lequel la couche de composition est durcie en continu sur un support temporaire représenté par un convoyeur à bande 13. La composition est déversée sous forme d'un film continu à partir par exemple d'une série de buses, ou d'un déversoir 14, pour constituer pratiquement une couche d'épaisseur uniforme. La couche est passée sous une ou plusieurs rampes infrarouges 15 disposées transversalement par rapport au sens de progression. Les rampes infrarouges sont éventuellement placées dans une enceinte non représentée pour maintenir l'atmosphère avoisinante dans les meilleures conditions notamment de température, cette atmosphère s'échauffant au cours du traitement.

L"application de la composition est effectuée en continu sur le convoyeur horizontal 13, lequel est avantageusement constitué d'un matériau polymère auquel la couche de silicate durcie n'adhère pas. La couche de silicate alcalin durcie est ensuite séparée du tapis convoyeur sous forme d'un ruban continu 16. Le ruban découpé aux dimensions adéquates peut être assemblée ultérieurement avec des feuilles de verre comme précédemment.

L'incidence de l'irradiation aux infrarouges sur le durcissement des compositions est l'objet des essais suivants.

Dans un premier essai on utilise une composition de silicate de potassium hydraté dont la composition comprend 38% en poids d'eau, 4% en poids d'éthylène glycol, 1% en poids d'hydroxy-tétraméthyl ammonium (TMAH). La composition présente un rapport molaire SiO₂/K₂O de 4,6.

La composition est constituée à partir d'une suspension de silice colloïdale à 50% en poids de silice. Les particules ont une dimension moyenne de 70nm (commercialisée sous le nom de Klébosol 50R50). Cette suspension est mise en réaction avec une solution concentrée d'hydroxyde de potassium à 50%.

La solution après l'ajout de l'éthylène glycol et du TMAH est en partie déshydratée sous pression réduite à une température ne dépassant pas 60°C jusqu'à obtenir la teneur de 38% en poids d'eau.

Une feuille de verre échantillon de 20x20cm est disposée horizontalement. Un cordon de caoutchouc de silicone est constitué à la périphérie de la feuille pour maintenir temporairement la composition fluide. Une couche de composition de 5mm d'épaisseur est appliquée sur la feuille de verre.

Laissée à température ambiante de 23°C la composition est suffisamment durcie après 4 heures pour pouvoir entrer dans un ensemble qui peut supporter la pression de calandrage appliquée après qu'une deuxième feuille de verre ait été superposée à la couche intumescente.

A titre de comparaison un échantillon constitué de la même manière que précédemment est exposé au rayonnement infrarouge.

Le système d'irradiation est constitué d'un ensemble de trois lampes développant une puissance maximum de 3,4 kW. Pour ces lampes le maximum de puissance en fonction de la longueur d'onde se situe à environ 1µm. Les lampes sont disposées 20cm au-dessus de l'échantillon, le tout étant dans une enceinte thermiquement isolée.

Les températures en surface de la couche (au contact de l'atmosphère), et au contact de la feuille de verre sont mesurées. Ces températures ne montrent que des écarts limités au cours de l'essai. De manière temporaire l'écart le plus important qui se produit au début de l'exposition ne dépasse pas 4°C. Cet écart est pratiquement inexistant après une minute et demie d'exposition.

Le cycle de traitement appliqué vise une rapide montée en température jusqu'à 80°C. Pour cela les lampes IR sont utilisées au maximum de leur puissance. La température est atteinte environ 2 minutes après le début de l'irradiation. La puissance est ramenée à 15% de la puissance précédente pour maintenir la température de la couche à 80°C. Le palier est maintenu 8 minutes puis l'irradiation est interrompue. La couche refroidie est durcie et peut être calandrée comme précédemment.

L'utilisation de l'irradiation infrarouge permet donc d'accélérer de façon très avantageuse le processus de production.

L'irradiation se faisant directement sur la couche de silicate alcalin exposée à l'atmosphère de l'enceinte de traitement, on constate que la couche durcie a une teneur en eau diminuée d'environ 2,5%. Cette teneur initialement de 38% est ramenée à 35,5% en poids de la couche. Cette particularité permet le cas échéant soit de tendre vers une teneur en eau plus faible, ou de partir d'une teneur plus élevée et donc de réduire les opérations préalables de déshydratation des compositions.

Indépendamment de la rapidité de durcissement de la couche de silicate, le traitement aux infrarouges est remarquable par son homogénéité qui s'observe en particulier dans la composition uniforme de la couche dans toute son épaisseur.

Pour vérifier l'état de la couche on procède à l'analyse Raman à diverses profondeurs pour les différents constituants. Les mesures sont les suivantes (tous les pourcentages sont exprimés de façon pondérale) :

| Profondeur mm | Ethylène Glycol % | TMAH % | Silicate de potassium | Eau % |
|---|---|---|---|---|
| 0,6 | 3,93 | 1,11 | 63,06 | 34,89 |
| 1,2 | 3,93 | 1,11 | 63,05 | 34,90 |
| 1,8 | 3,96 | 1,11 | 63,30 | 34,64 |
| 2,4 | 3,82 | 1,12 | 63,37 | 34,69 |
| 3 | 3,81 | 1,11 | 63,76 | 34,32 |

Les couches obtenues sont particulièrement homogènes. On ne constate pas de formation de peau en surface. On ne voit pas non plus de bulles, pour autant que les conditions de température soient bien respectées.

Des essais sont également effectués à des longueurs d'onde différentes pour déterminer l'incidence éventuelle du choix de la longueur d'onde utilisée.

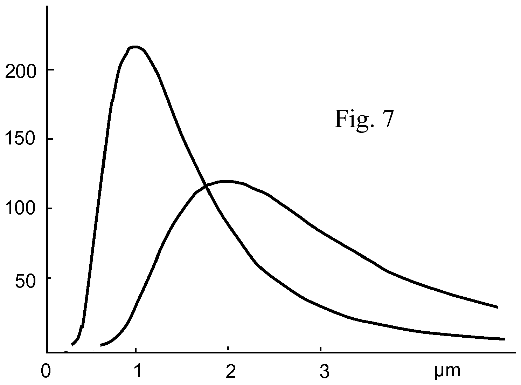

Sur des échantillons analogues aux précédents l'irradiation est faite avec des lampes dont le spectre présente respectivement un maximum de puissance à la longueur de 1µm, et 2µm. La figure 7 illustre les spectres respectifs de ces systèmes émetteurs. Le diagramme représente la distribution de puissance en fonction de la longueur d'onde. L'échelle de puissance n'est que relative, les unités sont arbitraires. Les deux spectres sont donnés pour des puissances égales des deux émetteurs.

On constate dans ce cas une légère différence dans l'évolution de la température au cours du cycle d'exposition. L'irradiation correspondant à un maximum de puissance à la longueur d'onde de 1µm conduit rapidement, comme indiqué précédemment, à l'égalité des températures de la couche en surface et sur la feuille. Pour atteindre le même résultat dans le cas de l'exposition au rayonnement de l'émetteur de même puissance dont le maximum de puissance correspond à longueur d'onde 2µm, le temps nécessaire à cette égalité de température est pratiquement doublé. Il en résulte que pour avoir le plus haut degré d'homogénéité de traitement, il est préférable d'utiliser le premier émetteur dans les conditions mises en oeuvre pour cet essai.

## Revendications

1. Procédé de production d'une couche de silicate alcalin pour vitrage anti-feu capable de durcir spontanément à température ambiante substantiellement sans séchage, à partir d'une composition fluide dont la teneur en eau est de 30% à 44% en poids, le rapport molaire SiO2/M2O est compris entre 3,5 et 7 et de préférence entre 4 et 6, M étant un élément alcalin. cette composition étant exposée sous une épaisseur qui n'est pas supérieure à 8mm et de préférence pas supérieure à 6mm, à un rayonnement infrarouge destiné à élever la température pour accélérer le durcissement, le maximum de puissance du spectre de l'émetteur correspondant à une longueur d'onde du rayonnement infrarouge comprise entre 0,5 et 5 *µ*m et de préférence entre 0,7 et 3*µ*m, pour parvenir au durcissement en un temps n'excédant pas 10 minutes et de préférence inférieur à 8 minutes.

2. Procédé selon la revendication 1 pour lequel la puissance et la distribution du rayonnement infrarouge sont choisies de sorte que la composition à durcir soit portée à une température qui n'est pas supérieure à 100°C et de préférence pas supérieure à 90°C.

3. Procédé selon l'une des revendications précédentes dans lequel l'exposition au rayonnement infrarouge est conduite sur la composition formant un film, directement sur ce film sans interposition d'une feuille de verre.

4. Procédé selon la revendication 3 pour lequel la teneur en eau de la couche par rapport à celle de la composition est abaissée en raison de l'évaporation résultant de l'échauffement de la couche exposée au rayonnement infrarouge.

5. Procédé selon l'une des revendications 1 ou 2 dans lequel l'exposition au rayonnement infrarouge est conduite au travers d'une feuille de verre sur laquelle la composition est appliquée.

6. Procédé selon l'une des revendications précédentes dans lequel les deux faces de la composition sont exposées au rayonnement infrarouge.

7. Procédé selon l'une des revendications 1 à 6 dans lequel la composition fluide est introduite entre deux feuilles de verre délimitant avec un moyen disposé à leur périphérie un espace étanche.

8. Procédé selon l'une des revendications 1 à 5 dans lequel l'exposition au rayonnement infrarouge est effectuée sur un film de composition déposé sur un support immobilisé, des rampes infrarouges se déplaçant en regard de la composition pour l'irradier uniformément.

9. Procédé selon la revendication 8 dans lequel le film de composition est appliqué sur des feuilles de verre.

10. Procédé selon l'une des revendications 1 à 5 dans lequel un film de composition est déposé en continu sur un support passant sous une ou plusieurs rampes émettrices disposées transversalement au passage du film de composition.

11. Procédé selon la revendication 10 dans lequel le film de composition est appliqué de manière continue sur un tapis convoyeur en matériau sur lequel la couche n'adhère pas.

12. Procédé selon l'une des revendications précédentes dans lequel la composition présente une teneur en eau de 35 à 43% en poids.

## Patentansprüche

1. Verfahren zur Herstellung einer Alkalisilikatschicht für eine Brandschutzverglasung, die weitgehend ohne Trocknung bei Umgebungstemperatur spontan härten kann, ausgehend von einer fließfähigen Zusammensetzung, deren Wassergehalt 30 bis 44 Gew.-% beträgt und deren SiO2/M2O-Molverhältnis zwischen 3,5 und 7 und vorzugsweise zwischen 4 und 6 liegt, wobei M für ein Alkalielement steht, wobei auf die Zusammensetzung in einer Dicke, die nicht über 8 mm und vorzugsweise nicht über 6 mm liegt, Infrarotstrahlung zur Erhöhung der Temperatur zur Beschleunigung der Härtung einwirken gelassen wird, wobei die maximale Leistung des Spektrums des Emitters einer Wellenlänge der Infrarotstrahlung zwischen 0,5 und 5 µm und vorzugsweise zwischen 0,7 und 3 µm entspricht, um zu einer Härtung in einer Zeit von höchstens 10 Minuten und vorzugsweise weniger als 8 Minuten zu gelangen.

2. Verfahren nach Anspruch 1, für das die Leistung und Verteilung der Infrarotstrahlung so gewählt werden, dass die zu härtende Zusammensetzung auf eine Temperatur, die nicht über 100°C und vorzugsweise nicht über 90°C liegt, gebracht wird.

3. Verfahren nach einem der vorhergehenden Ansprüche, bei dem das Einwirkenlassen der Infrarotstrahlung an der einen Film bildenden Zusammensetzung direkt an diesem Film ohne Einfügung einer Glasscheibe durchgeführt wird.

4. Verfahren nach Anspruch 3, für das der Wassergehalt der Schicht in Bezug auf den Wassergehalt der Zusammensetzung infolge der sich durch das Erhitzen der Schicht, auf die die Infrarotstrahlung einwirkt, ergebenden Verdampfung verringert wird.

5. Verfahren nach einem der Ansprüche 1 und 2, wobei das Einwirkenlassen der Infrarotstrahlung durch eine Glasscheibe, auf die die Zusammensetzung aufgebracht wird, durchgeführt wird.

6. Verfahren nach einem der vorhergehenden Ansprüche, wobei auf die Zusammensetzung beidseitig Infrarotstrahlung einwirken gelassen wird.

7. Verfahren nach einem der Ansprüche 1 bis 6, bei dem die fließfähige Zusammensetzung zwischen zwei Glasscheiben, die mit einem an ihrer Peripherie angeordneten Mittel einen dichten Raum begrenzen, eingeführt wird.

8. Verfahren nach einem der Ansprüche 1 bis 5, wobei das Einwirkenlassen der Infrarotstrahlung an einem auf einen immobilisierten Träger aufgebrachten Zusammensetzungsfilm durchgeführt wird, wobei Infrarotrampen zur einheitlichen Bestrahlung in Bezug auf die Zusammensetzung bewegt werden.

9. Verfahren nach Anspruch 8, bei dem der Zusammensetzungsfilm auf Glasscheiben aufgebracht wird.

10. Verfahren nach einem der Ansprüche 1 bis 5, bei dem ein Zusammensetzungsfilm kontinuierlich auf einen unter einer oder mehreren quer zur Laufrichtung des Zusammensetzungsfilms angeordneten Emitterrampen laufenden Träger aufgebracht wird.

11. Verfahren nach Anspruch 10, bei dem der Zusammensetzungsfilm kontinuierlich auf ein Förderband aus einem Material, an dem die Schicht nicht haftet, aufgebracht wird.

12. Verfahren nach einem der vorhergehenden Ansprüche, wobei die Zusammensetzung einen Wassergehalt von 35 bis 43 Gew.-% aufweist.

## Claims

1. Process for producing an alkali metal silicate layer for fireproof glazing capable of hardening spontaneously at ambient temperature substantially without drying, starting from a fluid composition, of which the water content is from 30% to 44% by weight, the SiO₂/M₂O molar ratio is between 3.5 and 7 and preferably between 4 and 6, M being an alkali metal element, this composition being exposed under a thickness which is no greater than 8 mm and preferably no greater than 6 mm, to infrared radiation intended to raise the temperature in order to accelerate the hardening, the maximum power of the spectrum of the emitter corresponding to a wavelength of the infrared radiation of between 0.5 and 5 µm and preferably between 0.7 and 3 µm, in order to achieve the hardening in a time not exceeding 10 minutes and preferably less than 8 minutes.

2. Process according to Claim 1, for which the power and the distribution of the infrared radiation are chosen so that the composition to be hardened is brought to a temperature which is no greater than 100°C and preferably no greater than 90°C.

3. Process according to either of the preceding claims, in which the exposure to infrared radiation is carried out on the composition forming a film, directly on this film without insertion of a glass sheet.

4. Process according to Claim 3, for which the water content of the layer relative to that of the composition is lowered due to evaporation resulting from the heating of the layer exposed to the infrared radiation.

5. Process according to either of Claims 1 and 2, in which the exposure to infrared radiation is carried out through a glass sheet on which the composition is applied.

6. Process according to one of the preceding claims, in which the two faces of the composition are exposed to the infrared radiation.

7. Process according to one of Claims 1 to 6, in which the fluid composition is introduced between two glass sheets delimiting, with a means positioned at their periphery, a leaktight space.

8. Process according to one of Claims 1 to 5, in which the exposure to the infrared radiation is carried out on a composition film deposited on an immobilized support, infrared bars moving opposite the composition in order to irradiate it uniformly.

9. Process according to Claim 8, in which the composition film is applied to glass sheets.

10. Process according to one of Claims 1 to 5, in which a composition film is deposited continuously on a support passing under one or more emitting bars positioned transversely to the passage of the composition film.

11. Process according to Claim 10, in which the composition film is applied continuously on a conveyor belt made of material to which the layer does not adhere.

12. Process according to one of the preceding claims, in which the composition has a water content of 35% to 43% by weight.
